(19) Europäisches Patentamt
European Patent Office
Office européen des brevets

(11) EP 2 941 454 B1

(12) EUROPEAN PATENT SPECIFICATION

(45) Date of publication and mention of the grant of the patent:
**01.03.2017 Bulletin 2017/09**

(21) Application number: **13844540.8**

(22) Date of filing: **19.12.2013**

(51) Int Cl.:
***C08J 9/36*** *(2006.01)* ***C08J 9/00*** *(2006.01)*
***C08J 9/10*** *(2006.01)*

(86) International application number:
**PCT/IT2013/000356**

(87) International publication number:
**WO 2014/106867 (10.07.2014 Gazette 2014/28)**

(54) **PROCESS FOR THE PRODUCTION OF RIGID FOAMED OBJECTS MADE OF POLYMER MATERIALS**

VERFAHREN ZUR HERSTELLUNG VON STARREN GESCHÄUMTEN GEGENSTÄNDEN AUS POLYMERMATERIALIEN

PROCÉDÉ DE PRODUCTION D'OBJETS EXPANSÉS RIGIDES FABRIQUÉS À PARTIR DE MATÉRIAUX POLYMÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2013 IT TV20130001**

(43) Date of publication of application:
**11.11.2015 Bulletin 2015/46**

(73) Proprietor: **MARICELL S.R.L.**
**32013 Longarone (BL) (IT)**

(72) Inventors:
- **BIANCHIN, Eugenio**
  **I-31100 Treviso (IT)**
- **OLIVIER, Giacoma**
  **I-32014 Ponte nelle Alpi (IT)**
- **CASSOL, Massimo**
  **I-32021 Agordo (IT)**

(74) Representative: **Modiano, Micaela Nadia**
**Modiano & Partners**
**Via Meravigli, 16**
**20123 Milano (IT)**

(56) References cited:
**US-A1- 2010 068 487** **US-B2- 7 120 342**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to a novel use of substances of the group of organic Diazocompounds as foaming agents for the production of cellular, rigid plastic materials based on crosslinked structures made from Polyvinylchloride (PVC), Polyisocyanates and other chemical compounds, presenting substantially reduced hazards for human health as well as lower technical problems respect to currently used Diazo based foaming agents, and to a method for their advantageous use in foam preparation.

Background of Art

Note: *in the following text "pbw" stands for "percent by weight" in the specified mixture*

Polymer based rigid foams are since the beginning of plastic Industry a primary material for uses in a broad series of very important applications, among which f.i. those relating to thermal insulation of houses, industrial building, cold producing appliances etc., as well as core elements of structural panels covered by metal or glass or other materials reinforced facings. That is due to their peculiar low heat transmission coefficients, normally obtained through a positive combination of physical properties. In that respect low final apparent densities, closed cells percentages over 98%, low and uniform average sizes of cells, combined with low heat transmission values of gases entrapped into the cells and low thermal conductivities of polymer matrices are very important. Furthermore, some physical characteristics pertaining intimately to matrix nature, such as Compressive Strength and Impact Resistance are of relevance.

There are various polymer matrices and methods for producing highly rigid, tough and heat resistant foams with virtually closed cell structures bound to quite low heat transmission values. Among them, known compositions exhibiting desirable technical performances are related to a basic manufacturing process, still widely used in Industry, that is duly described in the Patent pubblications US2576749, US3200089, FR1366979(A), US4028449. Essentially that process provides initial use of Polyvinylchloride (PVC), Polyisocyanates, saturated or unsaturated acid organic Anhydrides, and optionally other unsaturated monomers, contributing, mainly under action of heat, to development of a solid polymer matrix structure. Moreover, additional presence of a low amount of a foaming agent provides generation of microcells throughout the polymer matrix acting as nuclei (or "embryos") for development of final closed cell structure. Further reaction of Polyisocyanates with water leads to expansion of those nuclei til final average cell size and to intermolecular crosslinking within polymer matrix through formation of branched polyurea and biuret units. Moreover said crosslinking effect is enhanced by concurrent copolimerization of present unsaturated compounds. All those reactions provide on one side the elevated foam insulation properties of foam and on the other they stiffen the polymer foam and increase its resistance to mechanical and thermal stress significantly.

A proven, even though not exclusive, method for manufacturing such crosslinked PVC/Polyisocyanates rigid foams is based on a discontinuous process normally taking place in four stages.

In the first stage of process a starting viscous mixture is usually prepared from a group of constituents, the fundamentals of which are PVC in powder form, a liquid Polyisocyanate, an acid organic anhydride and a chemical compound which can decompose and release a gas under heating.

The first main component in the mixture is PVC. It has normally a K-value of at least 70 and is a fine powder having an average particle size below 80$\mu$m. PVC is used typically in amount from 20 and 80 pbw of initial mixture.

The second main component is selected from the group of liquid Polyisocyanates, taken as individual substances or as a combination thereof. In the Patent literature use of Toluene diisocyanate (2,4-isomer or a blend of 2,4-and 2,6 isomers in a ratio of 65:35 or 80:20 by weight)(TDI), Polyphenylmethane polyisocyanate (MDI) and its variants, Naphtylene-1,5-diisocyanate (NDI), Hexamethylene diisocyanate (HDI) and mixture thereof are claimed. Polyisocyanates are normally employed in amounts ranging from 15 up to 70 pbw of starting mixture.

The third main component is selected from the group of liquid or solid, saturated or unsaturated acid organic Anhydrides or blends thereof. Compounds as Acetic Anhydride, Succinic Anhydride, Maleic Anhydride, Phthalic Anhydride and the like are used, including also their blends in various proportions, in amounts ranging from 1 and 30 pbw of starting mixtures. The fourth main component is a compound that can realease a gas or vapour typically in the temperature range 40 - 120°C. An extremely wide group of substances may in principle be used, those being part of the bunch of organic low boiling organic solvents like acetone, methyll ethyl ketone, methylene chloride and the like, or low boiling non-halogenated hydrocarbons like pentane, cyclopentane, n-exane etc., or low boiling halogenated hydrocarbons or compounds that can release $CO_2$, like bicarbonate salts of alkali metals or plain water through its reaction with Polyisocyanates or $N_2$ gas releasing substances like organic Diazocompounds. Other minor components, such as double bond containing organic substances, epoxidized compounds, stabilizers and inorganic fillers may be optionally added to said starting mixture. Industrial practice excluded however in the time use of a large part of a.m. potential gas generating compounds. As a matter of facts most of them exhibited negative aspects in foam manufacturing process or vis-a-vis their impact with human health and environment. In particular:

a) organic solvents and low boiling non-halogenated hydrocarbons interact negatively with polymer matrix in formation; as a consequence they tend to give an unsufficient and irregular nucleation and often ruptures into the foam; furthermore some of them (e.g. methylene chloride) are dangerous for human health and environment and others (e.g. non-halogenated hydrocarbons) present significant combustion and esplosion risks in the actual process condition;

b) use of low boiling chlorinated hydrocarbons like CFCs and HCFCs was in the recent period prohibited by international and national Legislations implementing the Montreal Protocol of 1987 on protection of Earth's ozone stratospheric layer. Fluorinated hydrocarbons (HFCs) are still legally admitted on provision of Regulation (EC) 842/2006 of 17 June 2006 but, exhibiting high Global Warming Potential values, their uses are severely restricted to those ensuring no gas release in the atmosphere; that is clearly hardly the case in the subject process;

c) use of bicarbonate salts of alkali metals as free $CO_2$ generating compounds, yet exhibiting release of fairly well dispersed gas within the reacting mass, leads to unsufficient reduction of obtained foam density likely due to undesired chemical interactions of ionic functions of said salts and of their decomposition products with other components of subject chemical system, such f.i. Polyisocyanates;

d) use of plain water as "embryos" forming agent, through release of $CO_2$ from reaction with Polyisocyanates, proved as well to be unfeasable due again to obtainment of higher foam densities likely because of quick development of unavoidable, negative side reactions as normally expected f.i. from the Chemistry of Polyisocyanates.

In conclusion organic Diazocompounds were in the time selected as the nucleation gas generators of choice, as disclosed by the a.m. Patent references and confirmed by state-of-art industrial practice.

In the second stage of process the starting mixture is cast into a closed container or mould and subject to elevated temperatures and pressures. Under these conditions a series of simultaneous effects take place: *(i)* melting and gelling of PVC, *(ii)* decomposition of Diazocompounds into $N_2$ gas and free radical residues, whereby the gas, due to the imposed constraining pressure, remains entrapped in the form of initial microcells or "embryos", *(iii)* part of co-produced radical residues may activate copolymerization of unsaturated acid organic Anhydrides and of other possibly added double bond containing organic substances. At the end of this stage, a semisolid, flexible/elastic and relatively high density moulded article is obtained, that is moved to the third stage of the manufacturing process.

In the third stage the solidified elastic foam is subject to contact with water spray or water steam at 70-100° C, whereby free -NCO moieties of polyisocyanate compounds react with water providing the double positive effect of releasing substantial amounts of $CO_2$ and hardening the polymer matrix. Moreover water may react with present acid organic Anhydrides with generation of free carboxyl groups capable of further polymerization and crosslinking reactions with said -NCO moieties. That makes the product to expand to very low density while increasing its physical-mechanical properties significantly.

The foamed solid article is then subject to a further postcuring stage at temperatures normally below 70°C and again under a moist atmosphere in order to stabilize its dimensions and achieve its desired physical and application properties definitely.

It should be clear to the skilled in the art that, in order to get the a.m. physical and application properties of foams, choice and concentration of "embryos" generating compounds must be attentively cared, so that gas release rate be high at the temperatures adopted in the second stage of process and all substances involved in the gas release step do not interact negatively with other chemical reagents present in the reacting system.

As it was mentioned above, available organic Diazocompounds were, in the course of development of said foam production technology, recognized as the substances of choice for "embryos" generation. Indeed they are normally available as milled, micronized particles, can be duly dispersed in the starting mixture and decompose quickly with release of $N_2$ gas in a temperature range quite favorable for formation of microcells in the reacting mass. Last but not least their decomposition mechanism leads to formation of free organic radicals that may advantageously perform as promoters of polymerization and crosslinking reactions into the polymer matrix through reaction with double bonds bearing species or other activated chemical functions.

In that respect either reported Patent references and common industrial practice showed use, even though at a fairly low extent, of 4.4'-Diaminoazobenzene (DAB), relatively more frequently of 1,1-Azobisformamide = Azodicarbonamide (ADC), and most usually of 2,2'-azobis(2-methylpropanenitrile) = 2,2'-Azobis(2-methylpropionitrile) = Azoisobutyricdinitrile = Azobisisobutyronitrile (AIBN).

However also those $N_2$ releasing foaming agents revealed in the time substantial drawbacks. Both DAB and ADC bears two $-NH_2$ groups in their molecules, the first compound in the *para* position to its two aromatic rings, the second one as parts of its two amidic groups. Even though at different extents, both substances exhibit significant reactivity towards isocyanate groups, leading to early formation of polyurea and then of branched and crosslinked biuret structures. That increases viscosity of reacting mixture and decreases efficiency of released $N_2$ leading to reduced and irregular embryos formation, thus hindering obtainement of both desired uniform cell structure and low final foam density. Furthermore ADC in the course of toxicological studies showed carcinogenic and genotoxic activity. As a consequence

EU Commission, with their Directive 2004/1/EC of 6 January 2004, decided conservatively to prohibit use of the substance in plastic materials and articles intended to come into contact with foodstuffs. Even though Legislation limits its constraint to food contact events it is clear that concern exists even for other applications intended to come into contact with humans. Similarly, also AIBN revealed negative toxicological properties when it was discovered that its thermal decomposition residues (isobutyronitrile radicals) easily recombine to form 2,2,3,3-tetramethylbutanedinitrile (TMSN). That substance showed acute toxicity in animal studies (see f.i. in ICSC Card#1121 issued by World Health Organization - WHO - in 1993 and reconfirmed on 14 June 2012), such as most valued international hygiene Institutes (OSHA, ACGIH, NIOSH) recommended an occupational permissible exposure limit as low as 0.5 ppm ( = $3mg/m^3$). Moreover in a recent Risk Assessment study by BASF Chemical Company the tentative Derived No Effect Level (DNEL) for TSMN for human inhalative exposure would be as low as 25 $\mu g/m^3$. Additionally, long term permanence of those dangerous substances in the foams may cause not irrilevant safety problems especially at the time of dismantling and disposal of end-of-life articles, when they will be likely released into the environment during the crushing operations normally carried on in those cases.

It is worth adding further that AIBN in particular, being a microfine cristalline powder (with 90pbw particles of size typically below 75$\mu$m), can be easily set free into ambient air and form airborn mixtures at risk of explosion.

As a consequence that situation called for the substitution of current $N_2$ releasing embryos generators with safer ones and then for a substantial improvement of existing process for manufacturing PVC/Polyisocyanates based foams.

<u>Disclosure of invention</u>

The invention refers to a process for the production of objects made of rigid, expanded materials mainly based on PVC and Polyisocyanates, characterized by the novel usage as cell nucleation agents of substances bearing an organic Diazo group, that can advantageously set free $N_2$ gas, and are represented by the general formula:

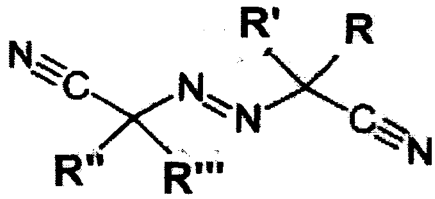

or by those of their structural or steric isomers, whereby R, R', R", R"' are made of equal or different, linear or branched alkyl groups, with exclusion of the case where R = R' = R" = R"' = - $CH_3$, each group containing from 1 to 8 Carbon atoms. More particularly and for the sake of exemplification, but not exclusively, the Invention refers to the new employment as cell nucleation agent in the subject process of the chemical compound named 2,2'-Azobis(2-methylbutanenitrile) (AMBN), having the composition represented by the above depicted structure, whereby R and R" are $-CH_2-CH_3$ groups and R' and R'" are $-CH_3$ groups. More specifically the Invention discloses the chemical nature of compounds subject to the new employment insofar they can set free $N_2$ gas in the thermal conditions adopted in said process without entailing the negative impact on safety and technical properties exhibited by currently used organic Diazocompounds. Moreover it describes a method for getting their most efficient function in the process for the production of said foams, but it is by no way limited by the following description.

As a matter of facts and for the sake of exemplification, products derived from decomposition of AMBN exhibit much lower hazards for humans [Approximate Lethal Concentration Values by inhalation of its residues (ALC, 4-hour exposure, rats = 8.7 mg/L) vs. TSMN's (= 0.1 mg/L) for AIBN]. Moreover AMBN presents, as such, similar or inherently lower health hazards respect to currently used Diazocompounds, whereby it is classified as "Harmful" vs "Toxic" of some alternative substances according to EU Hazard Classification criteria. Additionally, AMBN, being a non-cristalline material and having a pasty and cohesive consistency and then being hardly dispersible in air, exhibits significantly reduced explosion risks respects to Diazocompounds used in the current process. Furthermore it does not exhibit any free "active" hydrogen containing groups in its molecule, so excluding the negative chemical interactions with Polyisocyanates encountered with some alternative products.

Said process, that in its basic configuration is since long known by the skilled in the art, deals with the production of polymeric, low density foams made from a starting chemical mixture whose main components are selected from the groups of powderish Polyvinylchlorides (PVC), liquid Polyisocyanates, saturated or unsaturated acid organic Anhydrides and organic Diazocompounds.

Powderish PVC is normally characterized by a K-value of at least 70, an average particle size ranging between 1 and 70$\mu$m and it is used in an amount comprised between 20 and 80 pbw of starting mixture.

Liquid Polyisocyanates are well known free -NCO groups bearing compounds, that are characterized by their fast reactivity towards chemical substances bearing so called active hydrogens, leading to formation of Polyurethanes, Polyureas and other linear, branched or crosslinked polymeric structures. Essential condition for obtaining said polymeric structures is that either Polyisocyanates and the active hydrogen containing counterparts be at least difunctional as reacting groups. Among said Polyisocyanates Phenylene Diisocyanate, Toluene Diisocyanate (2,4-isomer or a blend of 2,4-and 2,6 isomers in a ratio of 65:35 or 80:20 by weight)(TDI), Diphenylmethane Diisocyanate (MDI) and its variants, Naphtylene-1,5-diisocyanate (NDI), Hexamethylene Diisocyanate (HDI), p,p',p''-Triphenylmethane Triisocyanate and mixtures and adducts thereof can be used in the subject process. Preferred but not exclusive Polyisocyanates are the so called MDI variants, consisting of monomeric or dimeric or oligomeric Polyphenylmethane Polyisocyanates or mixture thereof or of their adducts with - OH, $-NH_2$, -NH, -COOH, urea or carbodiimide groups bearing compounds or with other reactive hydrogen containing substances. Preferred MDI variants are those exhibiting functionalities between 2 and 3 -NCO groups/molecule, and preferably between 2,2 and 2,9 - NCO groups/molecule and the used amount ranges in the interval from 15 up to 70 pbw of starting mixture.

Saturated or unsaturated acid organic Anhydrides, such as Acetic Anhydride, Succinic Anhydride, Maleic Anhydride, solid Phthalic Anhydride or liquid modified Phthalic Anhydride, such as, f.i., that made of a mixture of Hexahydrophthalic Anhydride and Methylhexahydrophthalic Anhydride, and the like can be used, including also their blends in various proportions. Preferred types are Maleic Anhydride and the Phthalic Anhydrides in amounts ranging from 0.1 up to 30 pbw.

The organic Diazocompounds subject to the novel use according to the Invention are employed, either individually or in blend, in amounts comprised between 3 and 15 pbw of the starting mixture whereby. In the exemplificative but not exclusive case of 2,2'-Azobis(2-methylbutanenitrile) (AMBN), the employed amounts range preferably from 3 up to 10 pbw of the starting mixture.

Moreover, many of said Diazocompounds, and AMBN in particular, are pasty and cohesive substances, so that availability of them in the form of discrete micronized particles, such as required by most efficient dispersion in the starting mixture, turns out to be quite problematic, in so far leading to high probability of formation of unhomogeneous and coarse cell structure. According to the Invention, the alternative dispersion method was then found of dissolving the desired amounts of said Diazompounds in Polyisocyanates or in other liquid reagents present in sufficient amount in the starting mixture, that leading not only to overcoming said processing difficulties but also to warrant obtainment of final cellular structures of excellent quality, as required. The operation can be preliminarily done in a normal, separate mixing equiment for liquids at ambient or mild temperatures by slowly pouring the rough and coarse Diazocompound particles into Polyisocyanates or other adequate initial reagents under stirring til complete dissolution. Moreover it is clear that not all components of starting mixture can be used for that task, either for their solid state or their limited presence in said mixture. Furthermore, introduction of Diazocompounds through their preliminary dissolution in other solvents would be also disadvantageous because of already mentioned negative effects of presence of solvents in the initial mixture on foam physical properties.

In the exemplificative but not exclusive case of AMBN and in the most favourable cases of preferred MDI variants and liquid modified Phthalic Anhydrides, final concentration of AMBN may exceed 30 pbw of obtained solution. The following Examples will describe these preliminary, separate operations in more detail.

Other minor components may be used in the starting mixture, such as unsaturated monomers, crosslinking agents, stabilizers and others that can modify the PVC/Polyisocyanate based chemical structure of foam, f.i. by slightly varying intermolecular crosslinking of the backbone, improving rigidity or the impact or thermal resistance of final low density product. It is anyway clear to the skilled in the art that in no way those additions can influence the object and scope of the Invention.

The starting mixture is normally prepared in the first stage of process according to conventio-l nal procedures, as thouroughly described by Patent literature and since long applied in the industrial pratice. In particular, mixing is preferably made at ambient or mild temperatures, i.e. typically below 30°C, in a impeller or anchor stirred vessel at 50-1000 rpm for 20-40 min, where components are gently added in sequence from liquid to solid ones. A fluid, viscous dispersion is obtained that is cast f.i. into a panel shaped open mould, such as described in US Patent 2576749, that it is then covered by a metal lid.

In the second stage of the manufacturing process the closed mould is positioned between the plates of a press heated at temperatures ranging between 150 and 180°C and under an applied or self generating pressure between 20 and 500 bar. In that stage the dissolved Diazocompound exploits all its peculiarities, either as optimum "embryos" generator and as releaser of substantially safe decomposition products, not to say its potential capability to contribute to partial crosslinking or modification of the forming structure through its radicall residues. After a residence time from 15 up to 80 min, the mould is cooled down til room temperature, the press is opened, and the panel is removed from mould. The part exhibits a flexible, elastic consistency and has a density of between 500 and 800 $Kg/m^3$.

In the third stage of process the panel is positioned in an oven at 60-100°C and showered by water spray or steam for a residence time between 30 min and 4 hours, whereby, under action of heat and the combined influence of

already present nucleation gases and of released $CO_2$ from reaction of free -NCO groups with water molecules, it expands further and crosslinks to obtain a rigid foam of density and physical performances close to but still not matching the desidered final values. In particular, densities may be obtained ranging between 35 and 450 Kg/$m^3$ depending on product type.

The foamed product is then subjected to an additional hardening stage in a subsequent curing oven, whereby the residual free -NCO groups are saturated in presence of water spray or steam at temperatures between 40 and 90°C for residence times from 2 up to 60 days depending on final part density, that ranges normally between 30 and 400 Kg/$m^3$ in dependance upon product type and used formulation.

The Examples and Comparative Examples reported in the following will demonstrate, for the sake of exemplification but not exclusively, the effectiveness of AMBN, one out from the group of Diazocompounds whose novel use is object of the present Invention, as embryos generator in the manufacture of PVC/Polyisocyanates polymer foams, when previously subject to the dissolution operation hereby described. But the present invention is not limited to these Examples in any respect.

Procedures, Examples (positive) and Comparative Examples (negative)

A. Standard procedure for the manufacture of polymer foams as adopted in the following Examples: the liquid components and then the solid ones of the starting mixture were initially fed to a 3 liter vessel. After every addition the batch was mixed for 2-5min using an anchor stirrer, under a rotation speed between 80 and 100 rpm. The obtained fluid dough was then poured in an horizontal, panel shaped mould of 250 x 170 x 36mm external size and 190 x 110 x 27mm internal size. The mould was covered with a flat metal plate of 1.5 mm thickness and then positioned in a press generating a force so high to develop the pressure of 140 bar on mould. Press plates were heated at 172°C for 23min and then cooled down til 8-14°C. Pressure was then removed and the mould opened. In those conditions the moulded part could be easily pulled out. The part was a solid panel with a flexible, elastic consistency.
The panel was then submitted to a dense water spray in a closed chamber at 78°C for 30 min and then at 90°C for 50-60min. so reaching a density close to the final expected. The part was subsequently subject to a curing step in a following chamber saturated with water vapour at 63°C for 5 days, whereby its foaming process was brought to fulfillment with a further approx 10% density reduction, and to definite stabilization of its physico-mechanical properties.

B. Preparation of concentrated AMBN solutions: the Polyisocyanate or the liquid modified Phthalic Anhydride were weighed in a glass beaker and then the intended quantity of AMBN was poured in under stirring at 25°C til complete solubilization. The obtained solution was then brought, in amount according to formulation, to the operations described in the Standard procedure.

C. Chemical substances used in the following Examples and their acronyms.

- Polyvinylchloride = PVC
- Polyphenylmethane Polyisocyanate PMDI
- Phthalic Anhydride = FtAn
- Liquid modified Phthalic Anhydride LFtAn
- N-pentane = Pentane
- Sodium bicarbonate = NaBC
- Azodicarbonamide = ADC
- 2,2'-Azobis(2-methylpropanenitrile) = AIBN
- 2,2'-Azobis(2-methyllbutanenitrile) = AMBN

Comparative Example 1

Formulation (pbw): PVC 47.80; PMDI 35.10; FtAn 10.95; ADC 6.15

The Standard Procedure was followed. Relevant problems on demoulding of panel were encountered. A quite high final density of part was measured (350 Kg/$m^3$ according to ISO 845, vs expected 62-66 Kg/$m^3$). Bulges and a massive internal cavity were also observed. Conclusion: poor efficiency of ADC as nucleation agent.

Comparative Example 2

Formulation (pbw): PVC 47.80; PMDI 35.10; FtAn 10.95; ADC 4.30; AMBN 1.85 The Standard Procedure and the Preparation were followed. A panel of still high final density (150 Kg/$m^3$), even though lower than in Comparative Example 1, was obtained.
Conclusion: poor efficiency of ADC as nucleation agent, even though relieved by its partial I substitution with an AMBN aliquot.

Comparative Example 3

Formulation (pbw): PVC 48,00; PMDI 35.30; FtAn 11.00; Pentane 5.40; ADC* 0.30 The Standard Procedure was followed. Large swelling was observed already after the expansion step of part under water spray at 78°C. A big bulge was present in the centre of sectioned final part, that propagated along almost all its length.

**(ADC* = small ADC aliquot aiming to accelerate increase of hardness of part in the expansion step – rationale: a.m. hypothesys of ADC's reaction with Polyisocyanates).**

Conclusion: very poor efficiency of N-pentane as nucleation agent in the subject process

Comparative Example 4

Formulation (pbw): PVC 47.80; PMDI 34.90; FtAn 11.00; NaBC 6.00

The Standard Procedure was followed. A coriaceous, compact panel was obtained.
Conclusion: Inefficiency of NaBC as nucleation agent in the subject process. Rationale: a.m. hypothesys of too fast hardening of forming matrix, triggered by chemical interactions between Polyisocyanates and NBC's decomposition residues, blocking the foaming effect of produced free $CO_2$.

Comparative Example 5

Formulation (pbw): PVC 47.80; PMDI 35.10; FtAn 10.95; AMBN 5.85; ADC 0.30.

The Standard Procedure was followed. The Preparation was not adopted. The part showed regular expansion on contact with water reaching the expected final density of approx. 63 Kg/$m^3$ according to ISO 845. However plenty of bubbles and blisters were present on panel surface, that, after part sectioning, appeared coarse and unhomogeneous with cell sizes ranging between 1 and 5mm.
Conclusion: Efficency was confirmed of AMBN as nucleation agent but need resulted of improving quality of its dispersion in the starting mixture aiming to get the desired cellular structure.

Comparative Example 6

Formulation (pbw): PVC 48.40; PMDI 35.30; FtAn 11.00; AIBN 5.00; ADC 0.30

The Standard Procedure was followed. The panel expanded regularly on contact with water and showed the desired final density of approx. 65 Kg/$m^3$ according to ISO 845. Its surface and cross section did not exhibit significant flaws and cellular structure was uniform with cell sizes lower than 0.6mm. Measurements of Thermal Conductivity of foam according to ISO 8301, of Compressive Resistance according to ISO 844 and of unnotched IZOD Impact Resistance according to DIN 53453 gave values of 0.031 W/mK, of 0.94 Mpa and of 0,46 KJ/$m^2$ respectively. GC-Mass spectroscopy carried out on final foam uncovered presence of Tetramethylsuccinonitrile (TSMN) in the expected amount of approx. 4 pbw of total mass. Conclusion: Efficency was confirmed of AIBN as nucleation agent but the generation was confirmed as well of a relevant amount of toxic TSMN in the course of subject process.

Example 1

Formulation (pbw): PVC 47.80; PMDI 35.10; AnFt 10.95; AMBN 5.85; ADC 0.30

The Standard Procedure as well as the Preparation (predissolution of AMBN in PMDI) were followed. The panel expanded regularly on contact with water and showed the desired final density of approx. 62 $Kg/m^3$. Its surface and cross section did not exhibit significant flaws and cellular structure was uniform with cell sizes lower than 0.6mm. Measurements of Thermal Conductivity of foam according to ISO 8301, of Compressive Resistance according to ISO 844 and of unnotched IZOD Impact Resistance according to DIN 53453 gave values of 0.031 W/mK, of 0.92 Mpa and of 0,48 $KJ/m^2$ respectively. GC-Mass spectroscopy carried out on final foam did not show presence of TSMN, as expected. Conclusion: positive result

Example 2

Formulation (pbw): PVC 47.80; PMDI 35.10; LFtAn 10.95; AMBN 5.85; ADC 0.30

The Standard Procedure as well as the Preparation (predissolution of AMBN in LFtAn) were followed. The panel expanded regularly on contact with water and showed the desired final density of approx. 63 $Kg/m^3$. Its surface and cross section did not exhibit significant flaws and cellular structure was uniform with cell sizes lower than 0.6mm. Measurements of Thermal Conductivity of foam according to ISO 8301, of Compressive Resistance according to ISO 844 and of unnotched IZOD Impact Resistance according to DIN 53453 gave values of 0.031 W/mK, of 0.91 Mpa and of 0,45 $KJ/m^2$ respectively. GC-Mass spectroscopy carried out on final foam did not show presence of TSMN, as expected. Conclusion: positive result

## Claims

1. A process for the production of objects made of a rigid expanded material **characterized by** the use of a starting liquid, viscous mixture comprising Polyvinylchloride (PVC), Polyisocyanates, solid or liquid, acid organic Anhydrides and one or more nucleation agents containing an organic Diazo group, represented by the general formula:

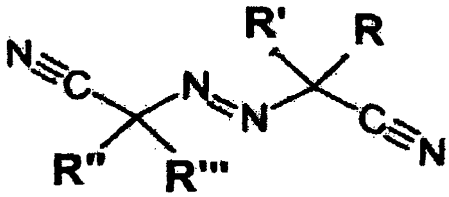

or by those of their structural or steric isomers, whereby R, R', R", R'" are equal or different, linear or branched alkyl groups, with exclusion of the case where R = R' = R" = R'" = $-CH_3$, each group containing from 1 to 8 Carbon atoms, provided that:

a) said nucleation agent or agents are employed in amount comprised between 3 and 15 pbw of said starting mixture;
b) said nucleation agent or agents are pre-dispersed in the Polyisocyanate or the liquid organic Anhydride component of said starting mixture.

2. A process according to Claim 1 **characterized by** the provision of a preliminary step tending to optimizing the dispersion of said nucleation agents in said starting mixture.

## Patentansprüche

1. Ein Verfahren für die Produktion von Objekten gemacht aus einem festen expandierten Material, **gekennzeichnet durch** die Verwendung einer flüssigen, viskosen Ausgangsmischung umfassend Polyvinylchlorid (PVC), Polyisocyanate, fest oder flüssig, saure organische Anhydride und einen oder mehrere Keimbildungsstoffe enthaltend eine organische Diazogruppe, dargestellt **durch** die allgemeine Formel

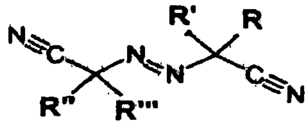

oder **durch** diejenigen ihrer strukturellen oder sterischen Isomere, wobei R, R', R", R'" gleich oder unterschiedlich sind, lineare oder verzweigte Alkylgruppen, mit Ausnahme des Falles, wo R = R' = R" - R'" = $-CH_3$, wobei jede Gruppe von 1 bis 8 Kohlenstoffatome enthält, vorausgesetzt, dass:

a) der Keimbildungsstoff oder die -stoffe in einer Menge verwendet werden, umfasst zwischen 3 und 15 pbw der Ausgangsmischung;
b) der Keimbildungsstoff oder die -stoffe in dem Polyisocyanat oder der flüssigen organischen Anhydridkomponente der Ausgangsmischung vor-dispergiert sind.

**2.** Ein Verfahren gemäß Anspruch 1, **gekennzeichnet durch** die Bereitstellung eines vorausgehenden Schritts, der darauf abzielt, die Dispersion der Keimbildungsstoffe in der Ausgangsmischung zu optimieren.

## Revendications

**1.** Procédé de production d'objets constitués d'un matériau rigide expansé **caractérisé par** l'utilisation d'un mélange liquide visqueux de départ comprenant du chlorure de polyvinyle (PVC), des polyisocyanates, des anhydrides d'acide organique solides ou liquides, et un ou plusieurs agents de nucléation contenant un groupement diazo organique, représenté par la formule général :

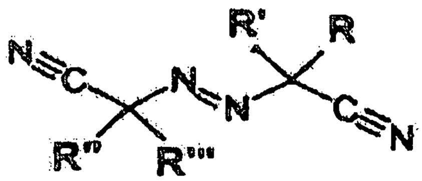

ou par celles de leurs isomères structuraux ou stériques, dans lesquelles R, R', R", R'" sont des groupements alkyle linéaires ou ramifiés, égaux ou différents, à l'exclusion du cas dans lequel R = R' = R" = R'" = $-CH_3$, chaque groupement contenant de 1 à 8 atomes de carbone, à condition qui :

a) ledit agent ou lesdits agents de nucléation soi(en)t utilisé(s) en une quantité comprise entre 3 et 15 % en poids dudit mélange de départ ;
b) ledit agent ou lesdits agents de nucléation soi(en)t pré-dispersés dans le composant polyisocyanate ou anhydride organique liquide dudit mélange de départ.

**2.** Procédé selon la revendication 1 **caractérisé par** l'introduction d'une étape préliminaire visant à optimiser la dispersion desdits agents de nucléation dans ledit mélange de départ.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2576749 A
- US 3200089 A
- FR 1366979 A
- US 4028449 A